# EUROPEAN PATENT SPECIFICATION

(11) **EP 2 269 926 B1**
(45) Date of publication and mention of the grant of the patent: **03.10.2012**
(21) Application number: 09164204.1
(22) Date of filing: 30.06.2009
(51) Int. Cl.: B65G 59/02

(54) **Unload system**
Entladungssystem
Système de décharge

(43) Date of publication of application: 05.01.2011
(73) Proprietor: Deutsche Post AG, 53113 Bonn (DE)
(72) Inventor: Lemola, Jussi, 02100 Espoo (FI)
(74) Representative: Jostarndt, Hans-Dieter

(56) References cited:
- EP-A- 1 213 243
- WO-A-2008/014532
- JP-A- 60 036 224
- NL-C1- 1 018 453

## Description

### Field of the invention

This invention relates to an unload assistant suitable to unload a pallet with multiple loaded objects and to a method for operating the unload assistant.

### Background of the invention

Document EP0283042 discloses a loading system to load a pallet with objects from a transport belt. The objects are transferred from a transporting belt to a lifting platform, which vertical position is aligned to the level of the transport belt. After loading the object to the lifting platform, the lifting platform is lowered to align the upper surface of the loaded object to the level of the transport belt and the next object is loaded on top of the previous object. To adjust the position of the lifting platform in order to align the upper surface of the loaded object to the level of the transport belt, sensors arranged on the transport belt to measure each height of the to-be-loaded objects on the transport belt. The measuring system is applicable to single objects transported separately on top of a transport belt. Unfortunately this system is not applicable to unload a pallet loaded with stacked objects.

Furthermore, an unload system according to the preamble of claim 1 is known from NL-C- 101 8453.

### Summary of the invention

It is an object of the present invention to provide an unload system preventing workers from carrying too heavy objects or objects in non-ergonomic positions during the unload process of any pallets and to decrease the required time for unloading a pallet.

The object is solved by an unload system as defined in claim 1.

The lifting means to adapt the vertical position of the platform may be any suitable means to move the platform with loaded pallets on top of it upwards or downwards. As an example the lifting means may be a hydraulic hoist or hydraulic actuators. Alternatively the platform may be lifted by an electric motor or electric actuator or any other hoist motor or a spindle. In a preferred embodiment, the lifting means should be able to lift also heavy pallets of at least 900 kg (loadable weight of an EU pallet). People skilled in the art are able to choose suitable lifting means within the scope of this invention. The vertical adjustment of the platform is controlled by the interaction of the position means indicating the desired unload level and the lifting means changing the vertical position of the platform in accordance to the indication provided by the position means..

The unload level denotes the distance between the floor (or floor level) and the bottom surface of the topmost object of the objects stacked on top of the pallet. The topmost object denotes the object on top of the stacked objects. The loading level of the transport means denotes the distance to the floor or floor level (or height above the floor) which corresponds to the level of the upper surface of the transport means. The bottom surface of the object is moved along the upper surface of the transport means. The vertical movements of objects during unloading the pallet (moving of objects from the pallet on top of the transport means) shall be minimized, preferably avoided. Here the transport means is at least one element of the group of conveyor belt (e.g. rubber conveyor belt), roller belt, chute or combinations thereof as used in automatic distribution systems as a labor saving system that allows large volumes to move rapidly.

The term "essential" denotes acceptable deviations between the level of the bottom surface of the topmost object to be unloaded from the pallet and the loading level of the transport means not causing any significant additional effort to move the objects to the transport means. A deviation of a few centimeters, for example 1 cm, 2cm, 5cm, is considered as acceptable in order to unload objects essentially horizontal.

The term "separate from the objects" denotes a position means, which is not permanently fixed to the objects. The position means may be arranged apart from the objects or attached to the objects only for a short time during the unload process, e.g. a detachable indicator. The use of a separate position means allows to apply the unload system to arbitrary pallets and objects regardless of the presence of any kind of dimension information on the pallets or objects, e.g. permanently attached dimension information.

The position means is suitable to provide a control signal to the lifting means comprising control means suitable to receive the control signal and to control the lifting means to adjust the vertical position of the platform according to the control signal. A position means (or position sensor) is any device that permits a position measurement. It can either be an absolute position means or a relative one (displacement means).

The control signal may be any signal suitable to be used to control the lifting means in order to lift the platform. The control signal may be an electrical, optical or electromagnetic signal or any other kind of suitable signal. The control means is any means suitable to control the lifting means in order to lift the platform.

In another embodiment the control means comprise a transducer to receive the control signal and to provide an adjustment signal, and preferably further comprising a computer to analyze and/or to process the adjustment signal. The transducer may denote any kind of transducer as a receiver for the control signal provided by the position means further converting the control signal or a physical attribute of the control signal into an adjustment signal to adjust the vertical position of the platform. The adjustment signal may be transferred directly to the lifting means or preferably be analyzed and further processed by a computer as part of the control means to control the lifting means in order to adjust the vertical position of the platform to equal the unload level of the topmost object and loading level of the transport means.

In another embodiment the position means is at least one emitter of the group of IR emitters, RF emitter, light reflectors, LED arrays, linear variable differential transformer, proximity sensor, or transponder, especially RFID transponder. The position of the position means can be detected, if the position means emits a control signal, for example an optical or electromagnetic signal. The optical or electromagnetic signals can be a radio frequency (RF) signal, a infrared (IR) signal, visible light reflected from a reflector as the position means, a light signal emitted from a light source like a LED or an array of LEDs or a signal emitted from a transponder. The control signal is received by the control means or by receiving means as part of the control means, for example by three or more transducers. The transducers for example are antennas, photo sensors, RF sensors or IR sensors. The signal received by the receiving means or transducers is analyzed in order to determine the position of the position means. People skilled in the art will apply common techniques to calculate the position of the position means from the control signals received by three or more transducers or other receiving means within the scope of this invention.

Common transponders receive a signal from another signal emitter and response to this signal on a predetermined frequency, preferably in a coded manner. RFID transponders are one group of transponders used in logistic processes. Such transponders may be LF transponders emitting at frequencies below 135kHz with an operating distance of 1.5m, HF transponders emitting frequencies between 3 and 30 MHz and an operating distance of 1.2m, UHF transponders emitting frequencies of 200MHz to 2GHz with an operating distance of 3-7m and MW transponders emitting at frequencies larger than 2GHz with an operating distance up to 2m. These transponders can be used in different environments. The operating distance is sufficient for the use of these position means within the unload system according to the present invention.

In an embodiment the position means is portable. This allows a dynamic positioning of the position means to locations, where the position means easily can indicate the unload level to the lifting means. The use of a portable position means allows to apply the unload system to arbitrary pallets and objects regardless of the presence of any kind of dimension information on the pallets or objects, e.g. permanently attached dimension information. In a preferred embodiment the position means comprises an adhesive layer, a glue layer or a Velcro fastener or any other suitable removable means, preferably to be attached or detached from objects. The position means can be attached to the topmost object close to the unload level or close to the upper surface of the object directly beneath to topmost object to be unloaded at a side, which is suitable to receive and / or to emit a control signal to the control means, preferably the side of the object facing towards the transport means. The latter location of the attached position means is preferred, because the position of the position means does not vary during the unload process of the topmost object and the position means remains at the objects stored on top of the pallet. The position means is attached to this object in a detachable manner. In this case, the platform will be lifted until the position means is at the unload level and the topmost objects can be moved to the transport means in an essentially horizontal direction without additional effort to lift or carry the objects by workers. Worker will detach the position means after unloading the topmost objects and attach the position means as described above again to the upper surface of the object directly beneath to topmost object, which was formally the object beneath the topmost object. This procedure repeats until the pallet is empty. The position means may also comprise a verification button in order to start the adjustment of the platform only on demand.

In an embodiment the lifting means is arranged in a cavity suitable to lower the vertical position of the platform below a floor level for stacked pallets with a height higher than the loading level. Stacked pallets carry several objects. The height of stacked pallets usually exceeds the height of the loading level of any neighbored transport means for unloading the pallet. Therefore a cavity is required to adjust the topmost objects on a stacked pallet to the loading level of the transport means by lowering the platform level beneath the floor level. The floor level denotes the location of the surface of the floor.

In an embodiment the transport means comprises moving means suitable to move the transport means close to the objects to be unloaded. After adjusting the vertical position of the platform to a level, where the lower surface of an object equals the loading level of the transport means, the objects only have to be pushed or pulled from the pallet towards the transport means without any further effort or vertical movements. A worker does not have to support the object to bridge a gap between pallet and transport means, because the gap is closed by moving the transport means towards the pallet. Here, the transport means is be at least one element of the group of conveyor belts, roller belts, chutes or combinations thereof.

The lifting means for the platform may comprise at least one element of the group of hydraulic actuators, electric actuators, spindles, hoist motors. In another embodiment, the lifting means are furthermore suitable to tilt the platform of a tilting angle towards the transport means in order to facilitate the moving of objects from the pallet to the transport means. If the objects on a loaded pallet are stacked on top of each other, the objects have to be moved towards the transport means essentially horizontally to prevent the workers from carrying too heavy objects. To move a stacked object workers have to apply a sufficient force to overcome the static friction between the stacked objects. With a horizontal aligned platform, the static friction is proportional to weight of the object times the static friction coefficient. Tilting the platform of a tilting angle, which is the angel between the horizontal position and a tilted position of the platform, lowers the force to be applied to move an object towards the transport means. The lilting angle shall be large enough to support the movement of objects, but not too high to prevent slippage of loaded objects. The weight of objects cannot be determined by image recognition systems without any information carrier attached to the individual objects. Suitable information carriers providing weight informations are e.g. barcodes, RFID tags or differently colored stripes indicating a certain weight or range of weights. The weight information may be used to adjust the tilting angle in order to provide support for unloading the objects without introducing a risk of slippage.

In a preferred embodiment, the platform comprises fixation means or a cover at least partly covering the platform at least partly made of a material with a high static friction coefficient to prevent the pallet from slippage on the tilted platform. Suitable fixation means are any means to prevent a slippage of the pallet on top of the tilted platform such as blocks, protruding edges, pins, etc brought into mechanical contact with the pallet in order to prevent any movement of the pallet in a tilted position of the platform. The friction coefficient between wood as a common pallet material and steel as one example of a platform material is 0.5. The static friction coefficient between wood and wood is 0.65, between steel and steel it is 0.15. To avoid a slippage of the pallet the platform may be coated with slip-reducing or slip-free materials, e.g. rubber, or equipped with a slip-reducing or slip-free underlay. People skilled in the art are able to select a suitable coating or underlay to prevent or reduce slippage of pallets due to tilted platforms.

The invention further relates to a method to unload a pallet using an unload system according to the present invention, as defined in claim 12.

The term "essential" denotes acceptable deviations between the level of the lower surface of the topmost object and the loading level of the transport means not causing any significant additional effort to move the objects to the transport means. A deviation of a few centimeters, for example 1cm, 2cm, 5cm, is considered as acceptable in order to unload objects essentially horizontal.

In an embodiment the step of indicating the unload level comprises the step of
- attaching the position means to the topmost object or the object beneath the topmost object, preferably to the object beneath the topmost object close to its upper surface, or
- attaching the position means to a worker at a suitable position to indicate the unload level.

The position means can be attached to the topmost object close to the unload level or close to the upper surface of the object directly beneath to topmost object to be unloaded at a side, which is suitable to receive and emit or to emit a control signal to the control means, preferably the side of the object facing towards the transport means. The latter location of the attached position means is preferred, because the position of the position means does not varied during the unload process and the position means remains at the objects stored on top of the pallet.

The above discussed embodiments are only examples. Skilled people may consider modifications of said embodiments within the scope of this invention. More details of the invention are shown in the following figures and the detailed description of embodiments.

### Brief description of the drawings

- Fig.1:: unload system according to the present invention, with (a) the platform with pallet to be unloaded, (b) lowered position of the pallet to unload the topmost objects to the transport means, (c) higher position of the platform in order to unload the next level of objects to the transport means, and (d) even higher position of the platform to unload the lowest stacked objects on top of the pallet.
- Fig.2:: stacked objects with position means reversible attached to the objects.
- Fig.3:: unload system according to the present invention with control means.
- Fig: 4: unload system according to the present invention with moveable transport means.
- Fig. 5:: unload system according to the present invention with tilted platform with (a) a coating on top of the platform and (b) with a fixation means to prevent slippage of the pallet on top of the platform.

### Detailed description of embodiments

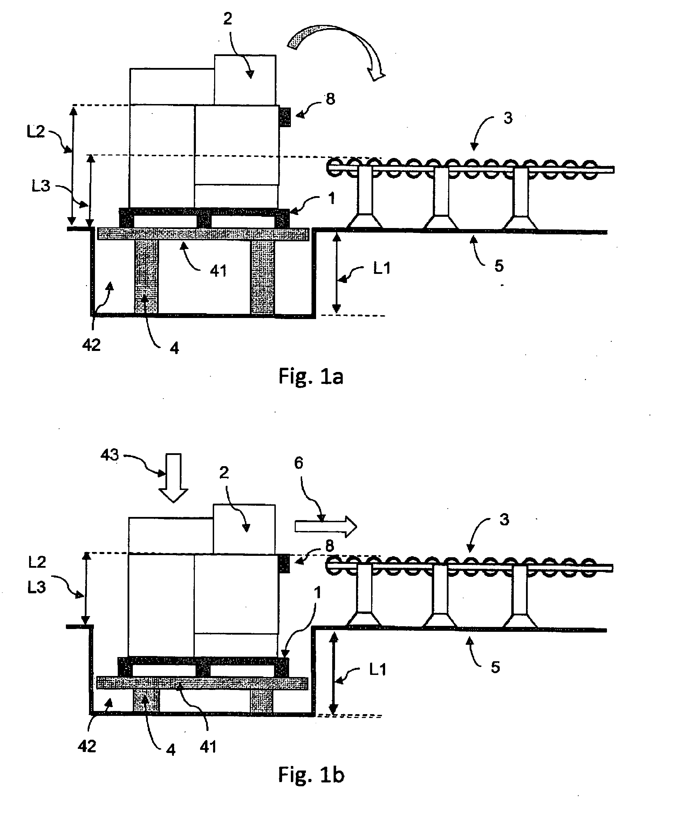

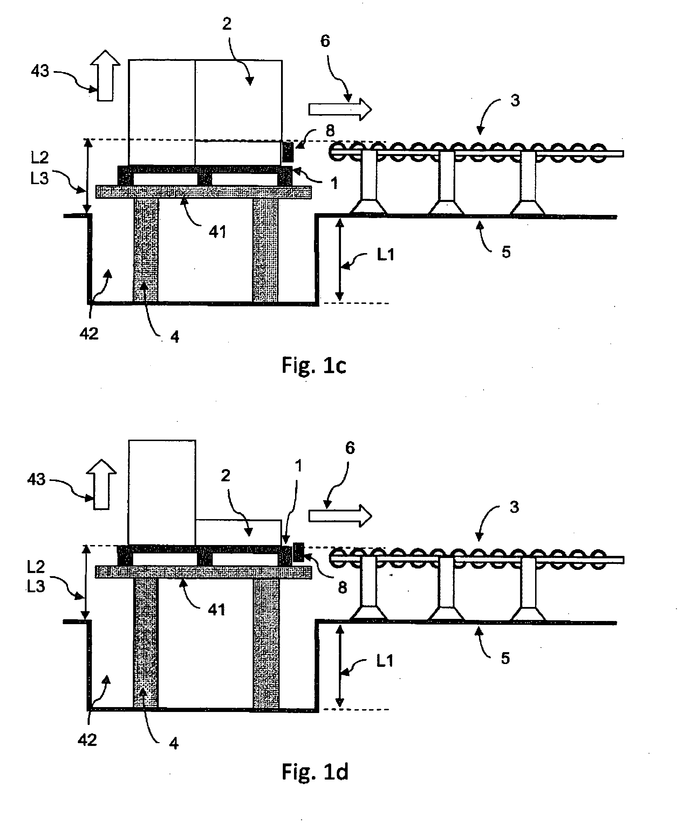

Fig.1 shows a unload system according to the present invention, with (a) the platform 41 with a pallet 1 to be unloaded and a position means 8 attached close to the upper surface of the object beneath the topmost object 2 to be unloaded, (b) lowered position of the pallet 1 to unload the topmost objects 2 to the transport means 3 according to the indicated unload level L2 be the position means 8, (c) higher position of the platform 41 in order to unload the next level of objects 2 to the transport means 3 after detaching the position means 8 from the first position and attaching the position means 8 again close to the upper surface of the object beneath the currently topmost object 2 to be unloaded now, and (d) even higher position of the platform 41 to unload the lowest level of objects 2 on top of the pallet 1 with position means 8 now attached close to the upper surface of the pallet 1. The platform 41 is moved by lifting means 4 upwards and/or downwards along the moving direction 43 depending on the dimensions of the pallet 1, the stacked objects 2 and the transport means 3. Usually the height of the stacked pallet exceeds the height of the upper surface of the transport means 3 above the floor level 5, indicated as loading level L3. The lifting means 4 adjust the platform 41 in order to equal the height of lower surface above floor level of the topmost object L2 to the loading level L3. To be able to perform this adjustment even for high stacked pallets 1, the lifting means 4 are arranged in a cavity 42 with a suitable depth L1. People skilled in the art are able to choose L1 in accordance to the known common pallet sizes and heights. The curved arrow in figure 1a indicates the required movement of objects during the unload process in case of no level adjustments with an unload system according to the present invention. In figures 1b to 1d, where a level adjustment is applied, the objects 2 can be unloaded towards the transport means 3 only by horizontal movements 6 avoiding any non-ergonomic positions and/or movements of workers unloading the pallet 1. The movements 6 may be horizontal or essentially horizontal. The latter term denotes movement in case of slightly misadjusted levels L2 and L3 without any negative impact on the desired ergonomic unload process. As an example, a misalignment of L2 and L3 in the order of a few centimeters will not be notice by workers during the unload process and is still be considered as sufficiently well aligned levels L2 and L3. The term "close to the surface" denotes a distance between the exact position of the bottom surface of the topmost object and the position means in the order of a few centimeters, for instance 1 cm, 2cm or 5cm.

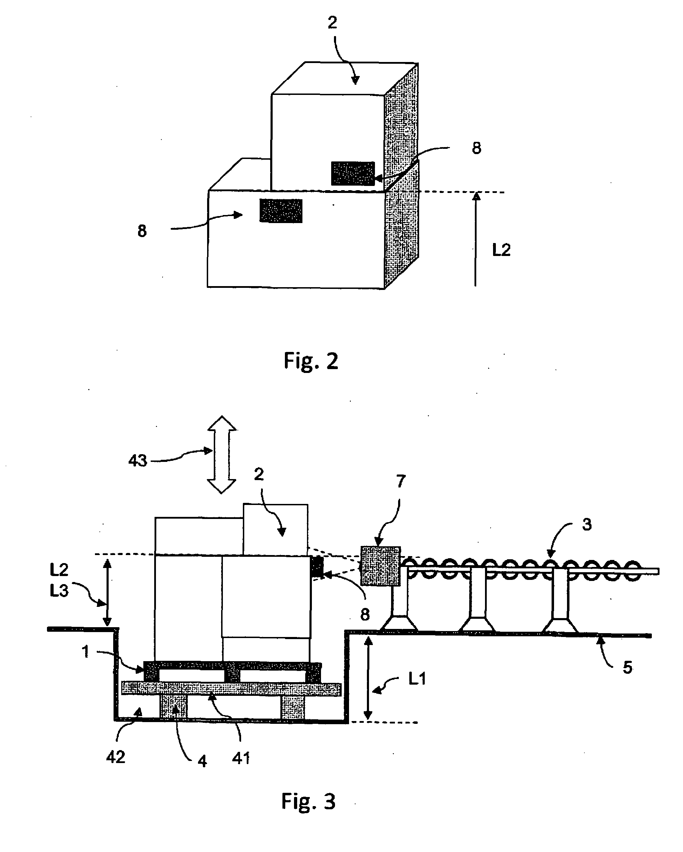

Fig. 2 shows as an example position means 8 attached close to the bottom surface of the topmost object 2 and alternatively attached close to the upper surface of the object beneath the topmost object 2 to be unloaded to indicate the unload level L2 to the unload system. As an example position means 8 are RFID transponders. The position means comprise an adhesive layer in order to be attached and detached reversibly from objects many times.

Fig. 3 shows the unload system according to the present invention with control means 7 suitable to receive the control signal from the position means. The control means 7 may be on one side of the pallet 1, or on two or more sides of the pallet 1. In the example, the control means 7 are arranged at the transport means 3 facing towards the pallet 1. In other embodiments there may be more control means to determin the position of the position means 8. The control means 7 controls the lifting means to adjust L2 and L3 to the same level.

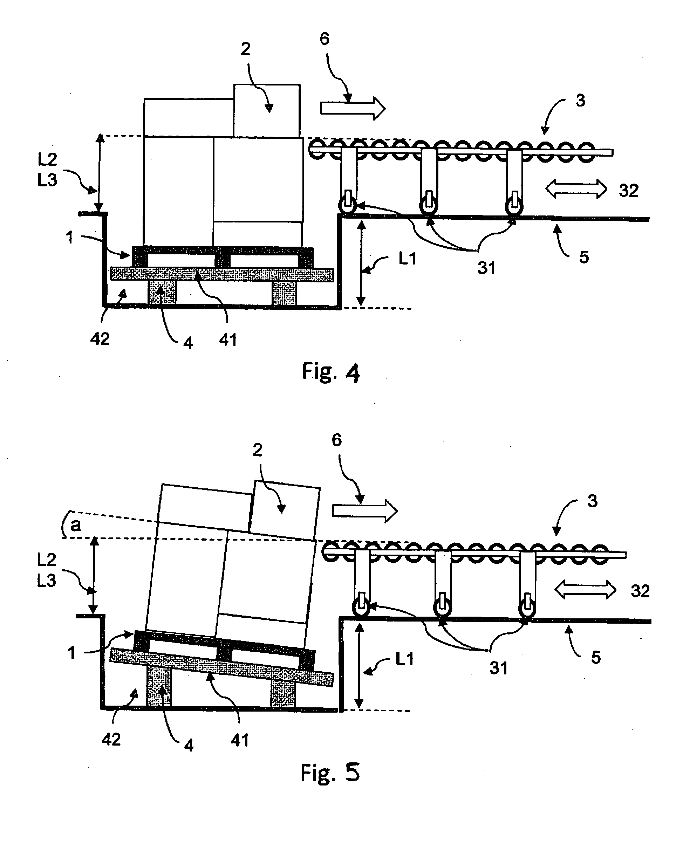

Fig. 4 shows another embodiment of the unload system, where the transport means 3 is not fixed to the floor 5, but can be moved towards 32 the pallet 1 to unload the pallet 1 and backwards 32 after completed unloading of the pallet 1 in order to replace the empty pallet 1 by another loaded pallet 1 with stacked objects 2 on top of it. The moving means 31 in order to move the transport means 3 may comprise any suitable moving means, e.g. rolls, wheels, guide rails or tracks. The moving means may allow moving directions 32 in a one dimensional or two dimensional manner. The position means is not shown here for ease of understanding.

Fig. 5 shows the unload system of figure 2 with the additional opportunity to tilt the platform 41 within the cavity 42 by a tilting angle α. Here the movement 6 to unload the objects 2 towards the transport means 3 is further supported by the downhill-slope force acting on the objects 2 in case of a tilted platform 41. Especially with tilted platforms 41, a movable transport means 3 is advantageous, because the distance between stacked objects and the transport means 3 depends on the tilting angle α. To avoid a disturbing gap between objects 2 and transport means 3, the transport means may be moved towards or backwards along the moving direction 32 to minimize the gap between objects 2 and transport means 3. The platform may further comprise anti-slippage means at least partly covering the surface of the platform at least partly made of material with a high static friction coefficient, such as rubber or rough plastic. Alternatively the anti-slippage means are permanently attached to the side of the top surface of the platform facing towards or neighboring the transport means, for example may be any kind of bars or blocks made of a pressure resistant material such as metal, hard plastic or wood. The position means is not shown in figure 7 for ease of understanding.

The shown embodiments must not be considered as limitation of the invention. The discussed embodiments are only examples of the present invention. People skilled in the art may consider alternative embodiments of the previously disclosed invention still falling into the scope of this invention as defined by the claims.

### LIST OF NUMERALS

- 1: pallet
- 2: objects
- 3: transport means
- 31: moving means of transport means
- 32: moving direction to move the transport means
- 4: lifting means
- 41: platform
- 42: cavity for lifting means
- 43: moving directing of lifting means
- 5: floor level
- 6: unload direction to unload objects
- 7: control means
- 8: separate position means reversible attached to objects
- L1: distance between floor level and bottom level of cavity for lifting means
- L2: distance between floor level and lower surface of loaded objects
- L3: loading level of the transport means
- α: tilting angle of platform

## Claims

1. An unload system to assist the unloading of a pallet (1) with stacked objects (2) on top of the pallet (1) comprising a platform (41) suitable to carry at least one pallet (1) on top of the platform (41), lifting means (4) to lift the vertical position of the platform (41) to an unload level (L2) for a topmost object (2) essentially equal to a loading level (L3) of a transport means (3) to move the topmost objects (2) in an essentially horizontal direction (6) to the transport means (3), and at least one position means (8) to indicate the unload level (L2) to the lifting means (4) by providing a control signal to the lifting means (4) comprising control means (7) suitable to receive the control signal and to control the lifting means (4) to adjust the vertical position of the platform (41) according to the control signal, **characterized in that** said position means (8) is a detachable position means (8) for non permanent attachment to the objects during the unload process.

2. The unload system according to claim 1, **characterized in that** the control means (7) comprise a transducer to receive the control signal and to provide an adjustment signal, and preferably further comprising a computer to analyze and/or to process the adjustment signal.

3. The unload system according to claim 1 or 2, **characterized in that** system comprises more than one control means (7) to determine the position of the position means (8).

4. The unload system according to any of the preceding claims, **characterized in that** the position means (8) is at least one emitter of the group of IR emitters, RF emitters, light reflectors, LED arrays, or transponders, especially RFID transponders.

5. The unload system according to any of the preceding claims, **characterized in that** the position means (8) is portable.

6. The unload system according to claim 5, **characterized in that** the position means (8) comprise an adhesive layer, a glue layer or a Velcro fastener to be attached and detached from the objects (2).

7. The unload system according to any of the preceding claims, **characterized in that** the lifting means (4) are arranged in a cavity (42) suitable to lower the vertical position of the platform (41) below a floor level (5) for stacked pallets (1) with a height higher than the loading level (L3).

8. The unload system according to any of the preceding claims, **characterized in that** transport means (3) comprises moving means (31) suitable to move the transport means (3) close to the objects (2) to be unloaded.

9. The unload system according to any of the preceding claims, **characterized in that** the transport means (3) is at least one element of the group of conveyor belts, roller belts, chutes or combinations thereof.

10. The unload system according to any of the preceding claims, **characterized in that** the lifting means (4) comprise at least one element of the group of hydraulic actuators, electric actuators, spindles, hoist motors.

11. The unload system according to any of the preceding claims, **characterized in that** the platform (41) can be tilted in order to support unloading of the objects (2).

12. Method to unload a pallet (1) using an unload system according to claim 1, comprising the steps of
- placing a pallet (1) with loaded objects (2) on top of a platform (41),
- indicating an unload level (L2) for a topmost object (2) by a detachable position means (8) attached to the objects (2) providing a control signal to a lifting means (4) comprising control means (7) suitable to receive the control signal,
- adjusting the vertical position of the platform (41) by the lifting means (4) adjusting the vertical position of the platform (41) according to the control signal in order to equal the unload level (L2) to a loading level (L3) of a transport means (3) in accordance to the indicated unload level (L2),
- moving the topmost object (2) in an essentially horizontal direction (6) to the transport means (3),
- detaching the positioning means (8) from the objects (2), and
- repeating steps two to five until the pallet (1) is unloaded.

13. Method to unload a pallet (1) according to claim 12, **characterized in that** the step of indicating the unload level (L2) comprises the step of
- attaching the position means (8) to the topmost object (2) or the object beneath the topmost object (2), preferably to the object beneath the topmost object (2) close to its upper surface.

14. Method to unload a pallet (1) according to claim 12or 13, **characterized in that** the step of indicating the unload level (L2) comprises the step of
- moving the transport means (3) close to the objects (2) to be unloaded by suitable moving means (31).

## Patentansprüche

1. Entladesystem zur Hilfe beim Entladen einer Palette (1) mit gestapelten Gegenständen (2) oben auf der Palette (1), wobei das System eine Plattform (41), die geeignet ist, wenigstens eine Palette (1) oben auf der Plattform (41) zu tragen, ein Hubmittel (4) zum Anheben der vertikalen Position der Plattform (41) auf eine Entladeebene (L2) für einen höchsten Gegenstand (2), die im Wesentlichen gleich einer Beladeebene (L3) eines Transportmittels (3) ist, um die obersten Gegenstände (2) in einer im Wesentlichen horizontalen Richtung (6) auf das Transportmittel (3) zu bewegen, und wenigstens ein Positionsmittel (8) zur Angabe der Entladeebene (L2) für das Hubmittel (4) durch Bereitstellung eines Steuersignals für das Hubmittel (4), das ein Steuermittel (7) umfasst, das dafür geeignet ist, das Steuersignal zu empfangen und das Hubmittel (4) zum Einstellen der vertikalen Position der Plattform (41) in Übereinstimmung mit dem Steuersignal zu steuern, umfasst,
**dadurch gekennzeichnet, dass** das Positionsmittel (8) ein lösbares Positionsmittel (8) zur nicht dauerhaften Befestigung an den Gegenständen während des Entladeprozesses ist.

2. Entladesystem nach Anspruch 1, **dadurch gekennzeichnet, dass** das Steuermittel (7) einen Wandler zum Empfangen des Steuersignals und zum Bereitstellen eines Einstellsignals umfasst und vorzugsweise ferner einen Computer zum Analysieren und/oder zum Verarbeiten des Einstellsignals umfasst.

3. Entladesystem nach Anspruch 1 oder 2, **dadurch gekennzeichnet, dass** das System mehr als ein Steuermittel (7) zum Bestimmen der Position des Positionsmittels (8) umfasst.

4. Entladesystem nach einem der vorhergehenden Ansprüche, **dadurch gekennzeichnet, dass** das Positionsmittel (8) wenigstens ein Emitter aus der Gruppe der IR-Emitter, der HF-Emitter, der Lichtreflektoren, der LED-Anordnungen oder der Transponder, insbesondere der RFID-Transponder, ist.

5. Entladesystem nach einem der vorhergehenden Ansprüche, **dadurch gekennzeichnet, dass** das Positionsmittel (8) tragbar ist.

6. Entladesystem nach Anspruch 5, **dadurch gekennzeichnet, dass** das Positionsmittel (8) eine Haftschicht, eine Klebstoffschicht oder ein Klettbandbefestigungsmittel umfasst, um an den Gegenständen (2) befestigt und von ihnen gelöst zu werden.

7. Entladesystem nach einem der vorhergehenden Ansprüche, **dadurch gekennzeichnet, dass** das Hubmittel (4) in einem Hohlraum (42) angeordnet ist, der dafür geeignet ist, die vertikale Position der Plattform (41) für gestapelte Paletten (1) mit einer größeren Höhe als die Beladeebene (L3) unter eine Bodenebene (5) abzusenken.

8. Entladesystem nach einem der vorhergehenden Ansprüche, **dadurch gekennzeichnet, dass** das Transportmittel (3) ein Bewegungsmittel (31) umfasst, das dafür geeignet ist, das Transportmittel (3) in die Nähe der zu entladenden Gegenstände (2) zu bewegen.

9. Entladesystem nach einem der vorhergehenden Ansprüche, **dadurch gekennzeichnet, dass** das Transportmittel (3) wenigstens ein Element aus der Gruppe der Förderbänder, der Förderbänder mit integrierten Rollen, der Rutschen oder der Kombinationen davon ist.

10. Entladesystem nach einem der vorhergehenden Ansprüche, **dadurch gekennzeichnet, dass** das Hubmittel (4) wenigstens ein Element aus der Gruppe der Hydraulikaktuatoren, der elektrischen Aktuatoren, der Spindeln und der Hebezeugmotoren umfasst.

11. Entladesystem nach einem der vorhergehenden Ansprüche, **dadurch gekennzeichnet, dass** die Plattform (41) geneigt werden kann, um beim Entladen der Gegenstände (2) zu unterstützen.

12. Verfahren zum Entladen einer Palette (1) unter Verwendung eines Entladesystems nach Anspruch 1, wobei das Verfahren die folgenden Schritte umfasst:
- Anordnen einer Palette (1) mit beladenen Gegenständen (2) oben auf einer Plattform (41),
- Angeben einer Entladeebene (L2) für einen obersten Gegenstand (2) durch ein an den Gegenständen (2) befestigtes lösbares Positionsmittel (8), das ein Steuersignal für ein Hubmittel (4) bereitstellt, das ein Steuermittel (7) umfasst, das zum Empfangen des Steuersignals geeignet ist,
- Einstellen der vertikalen Position der Plattform (41) durch das Hubmittel (4), wobei die vertikale Position der Plattform (41) in Übereinstimmung mit dem Steuersignal eingestellt wird, um die Entladeebene (L2) in Übereinstimmung mit der angegebenen Entladeebene (L2) an eine Beladeebene (L3) eines Transportmittels (3) anzugleichen,
- Bewegen des obersten Gegenstands (2) in einer im Wesentlichen horizontalen Richtung (6) zu dem Transportmittel (3),
- Lösen des Positioniermittels (8) von den Gegenständen (2), und
- Wiederholen der Schritte zwei bis fünf, bis die Palette (1) entladen ist.

13. Verfahren zum Entladen einer Palette (1) in Übereinstimmung mit Anspruch 12, **dadurch gekennzeichnet, dass** der Schritt des Angebens der Entladeebene (L2) den folgenden Schritt umfasst:
- Befestigen des Positionsmittels (8) an dem obersten Gegenstand (2) oder an dem Gegenstand unter dem obersten Gegenstand (2), vorzugsweise an dem Gegenstand unter dem obersten Gegenstand (2), in der Nähe seiner oberen Oberfläche.

14. Verfahren zum Entladen einer Palette (1) nach Anspruch 12 oder 13, **dadurch gekennzeichnet, dass** der Schritt des Angebens der Entladeebene (L2) den folgenden Schritt umfasst:
- Bewegen des Transportmittels (3) in die Nähe der zu entladenden Gegenstände (2) durch ein geeignetes Bewegungsmittel (31).

## Revendications

1. Système de déchargement pour aider au déchargement d'une palette (1) avec des objets empilés (2) sur la palette (1), comprenant une plate-forme (41) convenant à porter au moins une palette (1) sur la plate-forme (41), un moyen de levage (4) pour soulever la position verticale de la plate-forme (41) à un niveau de déchargement (L2) pour un objet supérieur (2), essentiellement égal à un niveau de chargement (L3) d'un moyen de transport (3), pour déplacer les objets supérieurs (2) dans une direction essentiellement horizontale (6) vers le moyen de transport (3), et au moins un moyen de positionnement (8) pour indiquer le niveau de déchargement (L2) au moyen de levage (4) en fournissant un signal de commande au moyen de levage (4) comprenant un moyen de commande (7) convenant à recevoir le signal de commande et à commander le moyen de levage (4) pour régler la position verticale de la plate-forme (41) en fonction du signal de commande,
**caractérisé en ce que** ledit moyen de positionnement (8) est un moyen de positionnement amovible (8) pour une connexion non permanente aux objets au cours du processus de déchargement.

2. Système de déchargement selon la revendication 1, **caractérisé en ce que** le moyen de commande (7) comprend un transducteur pour recevoir le signal de commande et pour fournir un signal de réglage, et comprenant en outre de préférence un ordinateur pour analyser et/ou pour traiter le signal de réglage.

3. Système de déchargement selon la revendication 1 ou 2, **caractérisé en ce que** le système comprend plus d'un moyen de commande (7) pour déterminer la position du moyen de positionnement (8).

4. Système de déchargement selon l'une quelconque des revendications précédentes, **caractérisé en ce que** le moyen de positionnement (8) est au moins un émetteur du groupe des émetteurs IR, des émetteurs RF, des réflecteurs de lumière, des agencements de LED ou des transpondeurs, notamment des transpondeurs RFID.

5. Système de déchargement selon l'une quelconque des revendications précédentes, **caractérisé en ce que** le moyen de positionnement (8) est portable.

6. Système de déchargement selon la revendication 5, **caractérisé en ce que** le moyen de positionnement (8) comprend une couche adhésive, une couche de colle ou une fermeture auto-agrippante devant être connectée aux et déconnectée des objets (2).

7. Système de déchargement selon l'une quelconque des revendications précédentes, **caractérisé en ce que** le moyen de levage (4) est agencé dans une cavité (42) convenant à abaisser la position verticale de la plate-forme (41) en dessous d'un niveau de sol (5) pour des palettes empilées (1) avec une hauteur supérieure au niveau de chargement (L3).

8. Système de déchargement selon l'une quelconque des revendications précédentes, **caractérisé en ce que** le moyen de transport (3) comprend un moyen de déplacement (31) convenant à déplacer le moyen de transport (3) près des objets (2) devant être déchargés.

9. Système de déchargement selon l'une quelconque des revendications précédentes, **caractérisé en ce que** le moyen de transport (3) est au moins un élément du groupe des courroies de transport, des courroies à rouleaux, des chutes ou de combinaisons de celles-ci.

10. Système de déchargement selon l'une quelconque des revendications précédentes, **caractérisé en ce que** le moyen de levage (4) comprend au moins un élément du groupe des actionneurs hydrauliques, des actionneurs électriques, des broches, des moteurs de levage.

11. Système de déchargement selon l'une quelconque des revendications précédentes, **caractérisé en ce que** la plate-forme (41) peut être basculée pour supporter le déchargement des objets (2).

12. Procédé de déchargement d'une palette (1) utilisant un système de déchargement selon la revendication 1, comprenant les étapes consistant à
- placer une palette (1) avec des objets chargés (2) sur une plate-forme (41),
- indiquer un niveau de déchargement (L2) pour un objet supérieur (2) par un moyen de positionnement amovible (8) connecté aux objets (2) fournissant un signal de commande à un moyen de levage (4) comprenant un moyen de commande (7) convenant à recevoir le signal de commande,
- régler la position verticale de la plate-forme (41) par le moyen de levage (4) réglant la position verticale de la plate-forme (41) en fonction du signal de commande afin de faire concorder le niveau de déchargement (L2) avec un niveau de chargement (L3) d'un moyen de transport (3) en fonction du niveau de déchargement indiqué (L2),
- déplacer l'objet supérieur (2) dans une direction essentiellement horizontale (6) vers le moyen de transport (3),
- déconnecter le moyen de positionnement (8) des objets (2), et
- répéter les étapes deux à cinq jusqu'à ce que la palette (1) soit déchargée.

13. Procédé de déchargement d'une palette (1) selon la revendication 12, **caractérisé en ce que** l'étape consistant à indiquer le niveau de déchargement (L2) comprend l'étape consistant à
- connecter le moyen de positionnement (8) à l'objet supérieur (2) ou l'objet en dessous de l'objet supérieur (2), de préférence à l'objet en dessous de l'objet supérieur (2) près de sa surface supérieure.

14. Procédé de déchargement d'une palette (1) selon la revendication 12 ou 13, **caractérisé en ce que** l'étape consistant à indiquer le niveau de déchargement (L2) comprend l'étape consistant à
- déplacer le moyen de transport (3) près des objets (2) devant être déchargés par un moyen de déplacement approprié (31).
